# EUROPÄISCHE PATENTSCHRIFT

(11) **EP 0 937 927 B1**
(45) Veröffentlichungstag und Bekanntmachung des Hinweises auf die Patenterteilung: **20.08.2003**
(21) Anmeldenummer: 99102273.2
(22) Anmeldetag: 05.02.1999
(51) Int. Cl.: F16K 11/044

(54) **Umschaltventil**
Diverter valve
Soupape d'inverseur

(30) Priorität: 20.02.1998 DE 19807201
(43) Veröffentlichungstag der Anmeldung: 25.08.1999
(73) Patentinhaber: Friedrich Grohe AG & Co. KG, 58675 Hemer (DE)
(72) Erfinder: Körfgen, Harald, 58675 Hemer (DE); Steinhoff, Stefan, 59846 Sundern (DE)

(56) Entgegenhaltungen:
- EP-A- 0 120 318
- DE-A- 2 004 918
- DE-A- 3 043 482
- US-A- 4 224 962

## Beschreibung

Die Erfindung betrifft ein Umschaltventil zum Umschalten von zufließendem Wasser zu verschiedenen Ausläufen, z. B. Badewannen- oder Brauseauslauf, wobei ein als Hohlkolben ausgebildetes Verschlußglied vorgesehen ist, welches sowohl von Hand mit einer Betätigungseinrichtung als auch durch ein Abstellen des Wasserzulaufs automatisch in eine bevorzugte Ausflußstellung stellbar ist, wobei zur Handbetätigung ein von einer federnden Einrichtung in eine neutrale Ruheposition gedrängte, mit einem Kopfteil im Hohlkolben begrenzt verschiebbar gehaltene, aus dem wasserführenden Bereich gedichtet herausgeführte Spindel vorgesehen ist, deren Hub im Hohlkolben wenigstens dem Ventilhub entspricht, so daß das Ventilverschlußglied ohne Bewegung der Spindel jede der beiden Absperrstellungen einnehmen kann.

Ein derartiges Umschaltventil ist aus der europäischen Patentschrift EP 0 120 318 B1 bekannt. In neuerer Zeit wird zunehmend gefordert, bei Schlauchbrauseabgängen zur Sicherung gegen ein Rückfließen von Brauchwasser ein oder auch zwei in Reihe geschaltete Rückflußverhinderer vorzusehen. Bei der Anordnung von Rückflußverhinderern im Bereich des Brauseausflusses kann es beim Umstellen des Umschaltventils während des Brausebetriebs auf den Wannenauslauf auftreten, daß das Verschlußglied den Brausewasserausfluß schlagartig abschließt, wodurch ein Unterdruck durch die abreißende Wassersäule zwischen dem Verschlußglied und dem Rückflußverhinderer entstehen kann, so daß das Verschlußglied in der Absperrstellung blockiert ist und nur durch relativ großen Kraftaufwand aus der Absperrstellung lösbar ist.

Der Erfindung liegt die Aufgabe zugrunde, das im Oberbegriff des Anspruchs 1 angegebene Umschaltventil so auszubilden, daß ein Blockieren in der Absperrstellung des Brauseausflusses leicht von Hand mit der Betätigungseinrichtung lösbar ist.

Diese Aufgabe wird erfindungsgemäß dadurch gelöst, daß im Boden des Hohlkolbens ein Entlastungsventil ausgebildet ist, welches mit einer von Hand vorgenommenen Verschiebung der Spindel aus der neutralen Mittel- oder Ruheposition zur Öffnung des Brauseausflusses öffenbar ist, während es in den anderen Stellungen der Spindel zum Hohlkolben geschlossen ist.

Weitere Ausgestaltungen der Erfindung sind in den Ansprüchen 2 bis 6 angegeben.

Ein Ausführungsbeispiel der Erfindung ist in der Zeichnung dargestellt und wird im folgenden näher beschrieben. Es zeigt
- Fig. 1: eine Wassermischbatterie mit einem Umschaltventil für einen Wannenausfluß und einen Brauseausfluß, wobei der Armaturenkörper mit dem Umschaltventil und einem Entlastungsventil im Längsschnitt dargestellt ist;
- Fig. 2: einen Teil des in Fig. 1 gezeigten Umschaltventils in vergrößerter Darstellung;
- Fig.3: ein anderes Ausführungsbeispiel eines Entlastungsventils in vergrößerter Darstellung;
- Fig. 4: ein weiteres Ausführungsbeispiel eines Entlastungsventils in vergrößerter Darstellung.

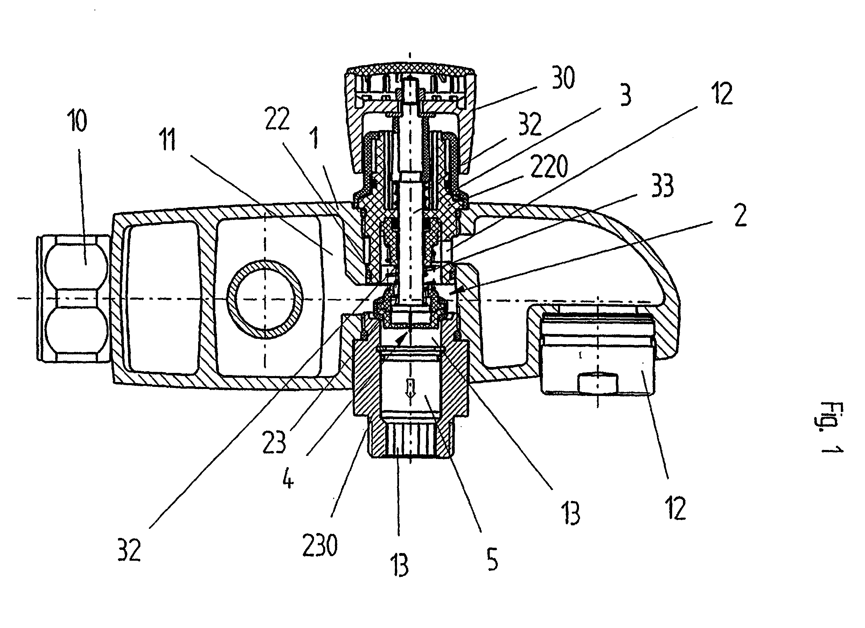

Bei der in Fig. 1 dargestellten Wassermischbatterie ist in einem Armaturenkörper 1 ein Ventilverschlußglied 2 eines Umschaltventils angeordnet, wobei das Verschlußglied 2 mit einer Spindel 3 betätigbar ist. An dem Armaturenkörper 1 sind Anschlüsse 10 für das zufließende Kalt- und Warmwasser vorgesehen, wobei in dem Armaturenkörper 1 - in der Zeichnung nicht dargestellt - in bekannter Weise ein Absperr- und Mischventil angeordnet ist, von dem das erzeugte Mischwasser in einen Mischwasserkanal 11 abgegeben wird. Der Mischwasserkanal 11 mündet radial im Bereich des Verschlußglieds 2 des Umschaltventils. Das Verschlußglied 2 ist als Hohlkolben ausgebildet, wobei am Außenmantel des Hohlkolbens 20 ein Doppelkegel 21 ausgebildet ist, der mit Hilfe der Spindel 3 durch eine axiale Verschiebung des Verschlußglieds 2 einerseits an einem ringförmigen Ventilsitz 23 für den Wannenausfluß und andererseits an einen ringförmigen Ventilsitz 22 für den Brauseausfluß zur Anlage bringbar ist, so daß das im Mischwasserkanal 11 zufließende Mischwasser wahlweise den Wannenausfluß 12 oder den Brauseausfluß 13 zuführbar ist. In dem Brauseausfluß 13 ist stromabwärts hinter dem Ventilsitz 23 ein Rückflußverhinderer 5 angeordnet, so daß ein Rückfließen von Brauchwasser über eine an einer Schlauchleitung befestigten Handbrause - in der Zeichnung nicht dargestellt - ausgeschlossen wird. Die Spindel 3 ist dabei axial verschieblich in einem in dem Armaturenkörper 1 eingeschraubten Kopfstück 220 gelagert. Eine Stirnseite des Kopfstücks 220 bildet den Ventilsitz 22, der den Wannenausfluß 12 ringförmig umschließt. Der Wannenausfluß 12 ist im Kopfstück 220 als Ringkanal ausgebildet, der stromabwärts über eine Radialöffnung im Kopfstück 220 in den Armaturenkörper 1 austritt. Der Rückflußverhinderer 5 ist koaxial zum Kopfstück 220 in einer ebenfalls im Armaturenkörper 1 eingeschraubten Hülse 230 angeordnet, wobei deren innere Stirnseite den Ventilsitz 23 für den Brauseausfluß 13 bildet. Die Spindel 3 ist aus dem wasserführenden Bereich gedichtet aus dem Kopfstück 220 herausgeführt und trägt am äußeren Endbereich eine Betätigungseinrichtung 30 für die Handbetätigung des Umschaltventils.
Am inneren Endbereich ist die Spindel 3 mit einem Kopfteil 31 axial begrenzt verschieblich in dem Hohlkolben 20 derart angeordnet, daß in einer neutralen Mittelstellung der Spindel 3 das Verschlußglied 2 sowohl an dem Ventilsitz 23 für den Wannenausfluß als auch an dem Ventilsitz 22 für den Brauseausfluß dichtend anliegen kann. Die Spindel 3 wird hierbei von zwei Federn 32 elastisch in eine neutrale Mittelstellung gedrängt. Außerdem wirkt auf das Verschlußglied 2 eine Rückstellfeder 33 derart ein, daß das Verschlußglied 2 bei abgestelltem Wasserzufluß in eine bevorzugte Absperrstellung, nämlich gegen den Ventilsitz 23, gedrückt wird, so daß das Umschaltventil nach Beendigung eines Brausevorgangs, d. h. der Wasserzufluß wird abgesperrt, selbsttätig den Brauseausfluß 13 absperrt und den Wannenausfluß 12 freigibt.

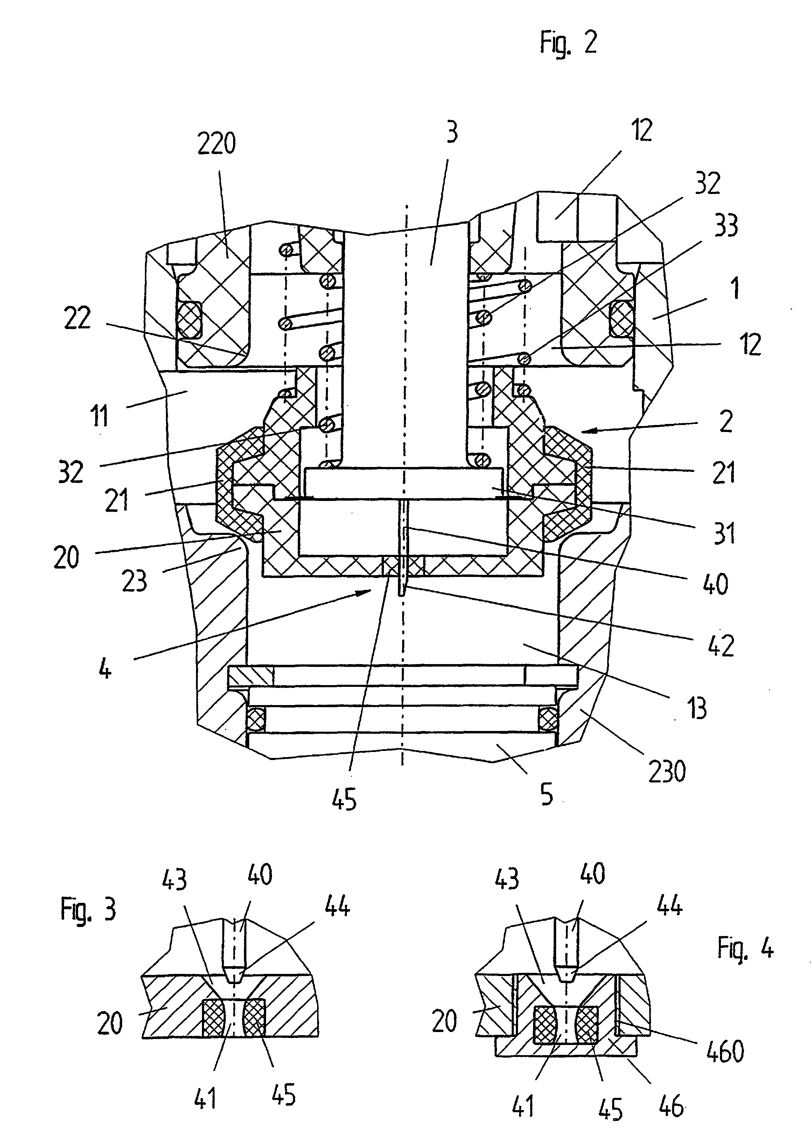

Im Bodenbereich des Hohlkolbens 2 ist ein Entlastungsventil 4 ausgebildet, wie es insbesondere aus Fig. 2 zu entnehmen ist. Als Verschlußglied des Entlastungsventils 4 ist hierbei eine koaxial an der Stirnfläche des Kopfteils 31 ausgebildete Nadel 40 vorgesehen, die so dimensioniert ist, daß in einer neutralen Mittelposition der Spindel 3 eine Entlastungsöffnung 41 von der Nadel 40 in allen Axialpositionen des Verschlußglieds 2, also sowohl in der Anlage-am Ventilsitz 23 als auch am Ventilsitz 22, absperrt. Die Nadel 40 durchdringt hierbei die Öffnung 41. Am vorderen Bereich der Nadel 40 ist eine Abflachung 42 ausgebildet, wobei die Abflachung 42 so angeordnet ist, daß sie, wenn das Verschlußglied 2 am Ventilsitz 23 anliegt und das Kopfteil 31 weiter aus der neutralen Mittelposition mit Hilfe der Betätigungseinrichtung 30 vom Benutzer herausgezogen wird, einen Entlastungs- bzw. Überströmkanal durch die Entlastungsöffnung 41 freigibt. Hiermit wird es ermöglicht, daß bei einer Umschaltung vom Brauseauslauf auf den Wannenauslauf sich zwischen dem Rückflußverhinderer 5 und dem Verschlußglied 2 bildender Unterdruck ohne zusätzliche Kraftaufwendung entlastet werden kann. Zur guten Abdichtung zur Wandung der Nadel 40 ist die Entlastungsöffnung 41 mit einer gummielastischen Auskleidung 45 versehen, die im Boden des Hohlkolbens 20 angespritzt, angeklebt oder eingeknöpft angeordnet sein kann. Die Nadel 40 kann einstückig an dem Kopfteil 31 ausgebildet oder auch in einer Bohrung im Kopfteil 31 gehalten sein. Die Nadel 40 kann hierbei zweckmäßig aus einem federelastischen nichtrostenden Werkstoff hergestellt werden.

In Fig. 3 ist ein anderes Ausführungsbeispiel eines Entlastungsventils dargestellt. Die Nadel 40 ist hierbei im wesentlichen mit einer zylindrischen Mantelfläche versehen, wobei im vorstehenden Stirnbereich eine vorzugsweise kegelförmige Schrägung 44 ausgebildet. Im Boden des Hohlkolbens 20 ist an der Innenseite eine der Schrägung entsprechende, vorzugsweise kegelförmige Aussenkung 43 ausgebildet, an der sich die Entlastungsöffnung 41 anschließt. Die Nadel 40 ist hierbei in der Länge so dimensioniert, daß die Schrägung 44 bei einer extrem herausgezogenen Ventilspindel 3 nicht völlig aus der Aussenkung 43 entfernt werden kann. Die Nadel 40 wird somit von der Aussenkung 43 aus der Entlastungsposition, wie es in Fig. 3 dargestellt ist, sicher zur Absperrung in die Entlastungsöffnung 41 zurückgeführt.

In Fig. 4 ist eine zur Fig. 3 abgewandelte Ausbildung eines Entlastungsventils dargestellt. Die Entlastungsöffnung 41 ist hierbei in einer Hülse 46 angeordnet, die mittels Gewinde 460 in den Boden des Hohlkolbens 20 einschraubbar ist.

## Patentansprüche

1. Umschaltventil zum Umschalten von zufließendem Wasser zu verschiedenen Ausläufen, z. B. Badewanneoder Brauseauslauf (12,13), wobei ein als Hohlkolben (20) ausgebildetes Verschlußglied (2) vorgesehen ist, welches sowohl von Hand mit einer Betätigungseinrichtung (30) als auch durch ein Abstellen des Wasserzulaufs automatisch in eine bevorzugte Ausflußstellung stellbar ist, wobei zur Handbetätigung eine von einer federnden Einrichtung in eine neutrale Ruheposition gedrängte, mit einem Kopfteil (31) im Hohlkolben (20) begrenzt verschiebbar gehaltene, aus dem wasserführenden Bereich gedichtet herausgeführte Spindel (3) vorgesehen ist, deren Hub im Hohlkolben (20) wenigstens dem Ventilhub entspricht, so daß das Ventilverschlußglied (2) ohne Bewegung der Spindel (3) jede der beiden Absperrstellungen einnehmen kann, **dadurch gekennzeichnet, daß** im Boden des Hohlkolbens (20) ein Entlastungsventil (4) ausgebildet ist, welches mit einer von Hand vorgenommenen Verschiebung der Spindel (3) aus der neutralen Mittel oder Ruheposition zur Öffnung des Brauseausflusses (13) öffenbar ist, während es in den anderen Stellungen der Spindel (3) zum Hohlkolben (20) geschlossen ist.

2. Umschaltventil nach Anspruch 1, **dadurch gekennzeichnet, daß** zur Ausbildung des Entlastungsventils (4) an dem Kopfteil (31) eine Nadel (40) ausgebildet ist, die eine Entlastungsöffnung (41) in dem Boden des Hohlkolbens (20) in Abhängigkeit von der Axialstellung des Kopfteils (31) öffnet oder schließt.

3. Umschaltventil nach Anspruch 2, **dadurch gekennzeichnet, daß** die Nadel (40) in jeder Betriebsstellung von der Entlastungsöffnung (41) aufgenommen ist, wobei am vorderen Abschnitt der Nadel (40) eine Abflachung (42) für den Fluiddurchtritt ausgebildet ist.

4. Umschaltventil nach Anspruch 2, **dadurch gekennzeichnet, daß** die Entlastungsöffnung (41) von der dem Kopfteil (31) zugekehrten Stirnseite eine Aussenkung (43) aufweist, von der die Stirnseite der Nadel (40) in der Öffnung geführt ist, wobei an der Stirnseite der Nadel (40), vorzugsweise eine entsprechende der Aussenkung (43) ausgebildete Schrägung (44), vorgesehen ist.

5. Umschaltventil nach einem der Ansprüche 2 bis 4, **dadurch gekennzeichnet, daß** in der Entlastungsöffnung (41) eine gummielastische Auskleidung (45) angeordnet ist, die in der Absperrstellung dichtend am Mantel der Nadel (40) anliegt.

6. Umschaltventil nach einem der Ansprüche 1 bis 5, **dadurch gekennzeichnet, daß** die Entlastungsöffnung (41) in einer Hülse (46) ausgebildet ist, die mittels Gewinde (460) oder Pressitz oder Klebung in dem Boden des Hohlkolbens (20) befestigbar ist.

## Claims

1. Change-over valve for switching inflowing water to different outlets, for example, bath or shower outlet (12,13), wherein there is provided a closure member (2) in the form of a hollow piston (20) which is settable into a preferred outflow position both manually by means of an operating device (30) and automatically by turning off the water supply, wherein for manual operation there is provided a spindle (3), which is biased by a resilient arrangement into a neutral rest position, is retained with a head part (31) in the hollow position (20) so as to be limitedly displaceable, and is led in sealed manner out of the water-bearing region, the travel of the spindle in the hollow piston (20) corresponding at least to the valve travel so that the valve closure member (2), without movement of the spindle (3), is able to assume each of the two shut-off positions, **characterised in that** in the base of the hollow piston (20) there is formed a discharge valve (4) which, by a manual displacement of the spindle (3), is openable from the neutral middle or rest position in order to open the shower outlet (13), whilst in the other positions of the spindle (3) relative to the hollow piston (20) it is closed.

2. Change-over valve according to claim 1, **characterised in that**, to form the discharge valve (4), on the head part (31) there is formed a needle (40) which opens or closes a discharge opening (41) in the base of the hollow piston (20) in dependence on the axial position of the head part (31).

3. Change-over valve according to claim 2, **characterised in that** the needle (40) is received by the discharge opening (41) in each operational position, a flattened region (42) for passage of fluid being provided on the leading portion of the needle (40).

4. Change-over valve according to claim 2, **characterised in that** the discharge opening (41) has a countersinking (43) facing towards the head part (31), which countersinking guides the end face of the needle (40) in the opening, wherein preferably a bevel (44) complementary to the countersinking (43) is provided on the end face of the needle (40).

5. Change-over valve according to any one of claims 2 to 4, **characterised in that** an elastomeric lining (45), which in the shut-off position lies sealingly against the outer surface of the needle (40), is arranged in the discharge opening (41).

6. Change-over valve according to any one of claims 1 to 5, **characterised in that** the discharge opening (41) is formed in a sleeve (46) which is fastened in the base of the hollow piston (20) by means of a thread (460) or by a press fit or by adhesion.

## Revendications

1. Robinet d'inversion pour l'inversion entre l'eau entrante et différents écoulements, par exemple un écoulement de baignoire ou de douche (12, 13), dans lequel un élément de fermeture (2) est conçu comme un piston creux (20), qui est réglable automatiquement à une position préférée d'écoulement aussi bien à la main par un dispositif d'actionnement (30) que par un arrêt de l'arrivée d'eau, avec pour l'actionnement manuel une tige (3) poussée par un dispositif élastique à une position de repos neutre, maintenue de manière mobile limitée, par une pièce de tête (31) dans le piston creux (20), guidée de manière étanche hors de la zone de circulation d'eau, et dont la course dans le piston creux (20) correspond au moins à la course du robinet, si bien que l'élément de fermeture (2) du robinet peut, sans déplacement de la tige (3), prendre chacune des deux positions d'arrêt,
**caractérisé en ce que**
dans le fond du piston creux (20), est formée une soupape de décharge (4) qui s'ouvre, avec un déplacement de la tige (3) effectué à la main, à partir de la position moyenne ou de repos neutre pour ouvrir l'écoulement de douche (13), tandis que, dans les autres positions, la tige (3) est fermée vers le piston creux (20).

2. Robinet d'inversion selon la revendication 1,
**caractérisé en ce que**
sur la pièce de tête (31) est formée, pour la formation de la soupape de décharge (4), une aiguille (40) qui ouvre ou ferme une ouverture de décharge (41) dans le fond du piston creux (20) en fonction de la position axiale de la pièce de tête.

3. Robinet d'inversion selon la revendication 2,
**caractérisé en ce que**
l'aiguille (40) est supportée dans chaque position de service par l'ouverture de décharge (41), dans lequel un méplat (42) est formé sur la partie avant de l'aiguille (40) pour le passage du fluide.

4. Robinet d'inversion selon la revendication 2,
**caractérisé en ce que**
l'ouverture de décharge (41) présente, sur la face frontale tournée vers la pièce de tête (31), un évidement (43) à partir duquel la face frontale de l'aiguille (40) est guidée dans l'ouverture, avec de préférence sur la face frontale de l'aiguille (40) un chanfrein (44) conçu de manière correspondant à l'évidement.

5. Robinet d'inversion selon l'une des revendications 2 à 4,
**caractérisé en ce que**
dans l'ouverture de décharge (41) est disposé un revêtement (45) élastique en caoutchouc qui, à la position d'arrêt, s'appuie de manière étanche contre l'enveloppe de l'aiguille (40).

6. Robinet d'inversion selon l'une des revendications 1 à 5, **caractérisé en ce que** l'ouverture de décharge (41) est formée dans un manchon (46) qui se fixe dans le fond du piston creux (20) au moyen d'un filet (460), d'un ajustage serré ou d'un collage.
